# EUROPEAN PATENT APPLICATION

(11) **EP 4 656 461 A1**
(43) Date of publication of application: **03.12.2025**
(21) Application number: 24179245.6
(22) Date of filing: 31.05.2024
(51) Int. Cl.: B60R 9/045, B60D 1/06, B60R 9/06, B60R 9/10

(54) **A MOUNTABLE RACK FOR A MOTOR VEHICLE**

(71) Applicant: Bedard, Guillaume, North Vancouver, BC V7J 2J7 (CA)
(72) Inventor: Bedard, Guillaume, North Vancouver, BC V7J 2J7 (CA)
(74) Representative: Bacchini, Davide

(57) **Abstract**

A mountable bicycle, motorcycle or all-terrain vehicle rack (10) for a motor vehicle (11), comprising:
a main pivot system;
a coupling assembly (60) comprising a shank (61) connectible to the motor vehicle (11), a tow ball head (62) arranged at an end of the shank (61) and a connector assembly (64);
a pivot arm (14) having distal (19) and proximal (21) ends, said proximal end (21) pivotably connected to said main pivot system;
an actuator (16) connected to said main pivot system and to said pivot arm (14) and operable to actuate said pivot arm (14) between a lowered position and a raised position relative to said main pivot system, said actuator (16) being configured to be electrically connected to an electric source;
securing means to secure the bicycle, motorcycle or all-terrain vehicle to said pivot arm (14).

The connector assembly (64) comprises a primary member (65) and a secondary member (66) each comprising a spherical indentation (67) to envelop the tow ball head (62) from opposite sides, the primary member (65) and secondary member (66) have corresponding fastener holes (69) distributed around the indentations (67) for accommodating fasteners (68).

## Description

The present invention refers to a mountable rack for a motor vehicle. The invention relates to the field of racks, and in particular, to mountable bicycle, motorcycle or all-terrain vehicle racks for motor vehicles.

Today, more people are enjoying using their bicycles to commute, for recreation or to perform physical training. In recent years with the improvement in battery technology, electric assisted bicycle (or e-bikes) are becoming more popular. E-bikes provide their users with extended range and make cycling accessible to a wider group of people who may have physical limitations or need to travel faster and further.

Although e-bikes have their advantages, they do come with their own drawbacks. Notably, e-bikes are generally heavier than conventional bicycles and therefore are challenging to load and transport using conventional bicycle racks. Conventional transport racks come in a variety of choices such as: vehicle roof mounted racks, hitch mounted racks, or trunk mounted racks to name a few. However, conventional racks are not specifically designed to easily accommodate heavier bicycles, motorcycles or all-terrain vehicles and provide no assistance in the loading process.

In this context, solutions are known that involve the use of a tow ball head as connector. However, the existing known solutions have not been designed with the support needed in the specific application of a motorized self-loading vertical bike carrier.

Accordingly, a need exists for a solution to effectively use a tow ball head connector in a motorized self-loading vertical bike carrier.

In this context, the technical task underlying the present invention is to propose a mountable rack for a motor vehicle, which overcomes the drawbacks in the prior art as described above.

In particular, an object of the present invention is to provide a mountable rack for a motor vehicle, which can effectively be connected to a tow ball head connector even when carrying heavy vehicles like e-bikes.

The stated technical task and specified objects are substantially achieved by a mountable rack for a motor vehicle, comprising:
a main pivot system;
a coupling assembly comprising a shank connectible to the motor vehicle, a tow ball head arranged at an end of the shank and a connector assembly; a pivot arm having distal and proximal ends, said proximal end pivotably connected to said main pivot system;
an actuator connected to said main pivot system and to said pivot arm and operable to actuate said pivot arm between a lowered position and a raised position relative to said main pivot system, said actuator being configured to be electrically connected to an electric source;
first securing means adjacent said distal end of said pivot arm to secure a first end of the bicycle, motorcycle or all-terrain vehicle to said pivot arm; second securing means adjacent said proximal end of said pivot arm to secure a second end of the bicycle, motorcycle or all-terrain vehicle to said pivot arm,
the connector assembly comprising a primary member and a secondary member, the primary member being rigidly connected to the main pivot system, the secondary member being removably mounted to the first one; the primary member and the secondary member each comprises a spherical indentation, the primary member and the secondary member are arranged to envelop the tow ball head from opposite sides with the spherical indentations, the primary member and secondary member have corresponding fastener holes distributed around the indentations for accommodating fasteners.

According to one embodiment, the tow ball head comprises a junction portion which connects the tow ball with the shank, said indentation comprising an additional spacing for accommodating this junction, the fastener holes being distributed around the indentations so that at least a pair of fasteners is located at opposite sides of the spherical indentation and at least another pair of fasteners is located at opposite sides of the additional spacing.

Preferably, the main pivot system comprises a pair of twin plates, said connector assembly being sandwiched between said twin plates. According to one embodiment, the connector assembly comprises a lockable safety system for the primary member and the secondary member. Preferably, the lockable safety system comprises one corresponding additional hole obtained on both the primary and secondary members, located at a side of the spherical indentation, and a lockable keyed pin inserted therethrough.

Preferably, said actuator is an electric linear actuator, a hydraulic linear actuator, a pneumatic linear actuator, or a piezoelectric actuator. According to one embodiment, said electric source is a battery or the motor vehicle's onboard electrical system.

Preferably, in said raised position, said connector mount and said pivot arm form an interior angle of less than 90°.

Preferably, said first and second securing means comprise straps.

According to one embodiment, said first securing means comprises a first cross-member connectable adjacent said distal end of said pivot arm, said first cross-member comprising: a wheel holder operable to receive a first wheel of the bicycle, motorcycle or all-terrain vehicle; and first wheel securing means to secure said first wheel to said wheel holder.

According to one embodiment, wherein said second securing means comprises: a second cross-member connectable to said pivot arm and operable to receive a second wheel of the bicycle, motorcycle or all-terrain vehicle; and second wheel securing means to secure a second wheel of the bicycle, motorcycle or all-terrain vehicle to said second-cross member.

According to one embodiment, said pivot arm comprises opposed first and second sides, wherein when said pivot arm is in said raised position, said first side is adjacent the motor vehicle and the bicycle, motorcycle or all-terrain vehicle is secured to said pivot arm adjacent said second side.

Additional features and advantages of the present invention will become more apparent from the non-limiting, description of a preferred, but non-exclusive embodiment of a mountable rack for a motor vehicle, as illustrated in the appended drawings, in which:
- figure 1 illustrates a mountable rack in a raised position in accordance with an embodiment of the invention, in a perspective view;
- figures 2-4 illustrate a part (connector assembly) of the mountable rack according to the present invention, respectively in a perspective, top and perspective exploded views;
- figure 5 illustrates a side view of the rack of figure 1, attached to a motor vehicle;
- figure 6 illustrates a perspective view of an actuator of the rack of figure 1 ;
- figure 7 illustrates a perspective view of the rack of figure 1, attached to the motor vehicle;
- figure 8 illustrates a perspective view of the rack of figure 1, attached to the motor vehicle and in a lowered position;
- figure 9 illustrates a perspective view of the rack of figure 1, attached to the motor vehicle and in a raised position;
- figure 10 illustrates a perspective view of the rack of figure 1, attached to the motor vehicle and in a lowered position with a front wheel attached thereto;
- figure 11 illustrates a perspective view of the rack of figure 1, attached to the motor vehicle in a semi-raised position with a front wheel attached thereto;
- figure 12 illustrates a perspective view of the rack of figure 1 attached to the motor vehicle in a raised position with a front wheel attached thereto;
- figure 13 illustrates a perspective view of a securing device of the rack of figure 1.

With reference to the figures, number 10 indicates a mountable bicycle rack 10 for a motor vehicle 11. Although rack 10 depicts a rack for use with a bicycle, those skilled in the art will appreciate that the rack may be suitably configured for use with a motorcycle, tricycle, all-terrain vehicles and the like.

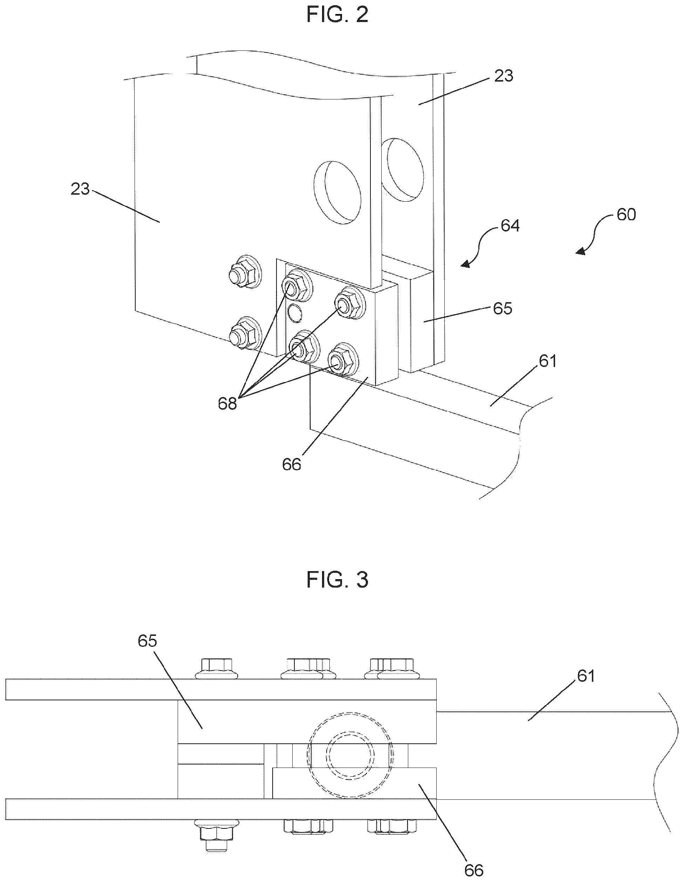

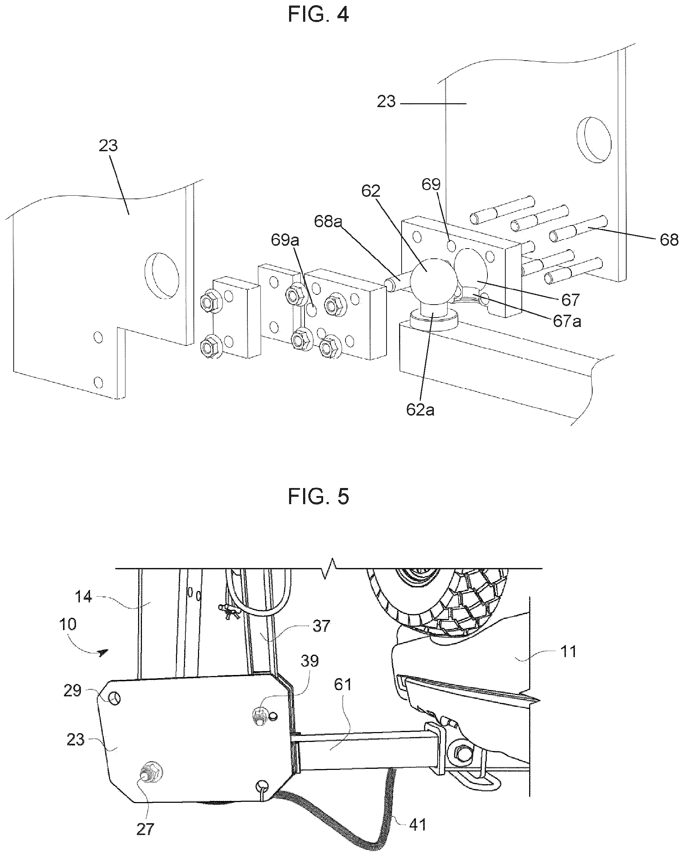

The rack 10 comprises a coupling device 60 for coupling the rack 10 to the motor vehicle 11. The coupling device 60 is particularly illustrated in Fig. 2-4.

The coupling device 60 comprises a shank 61 and a tow ball head 62 arranged at an end of the shank 61. The shank 61 is rigidly connected (i.e. integral) to the vehicle 11. The shank 61 and the tow ball head 62 defines a vehicle-side part of the coupling device 60.

The coupling device 60 comprises a connector assembly 64, which is rigidly connected (i.e. integral) to the rack 10. The connector assembly 64 defines a rack-side assembly, cooperating with the vehicle-side assembly to achieve coupling of the rack 10 with the vehicle 11.

The connector assembly 64 comprises a primary member 65 and a secondary member 66 removably coupled together. In particular, the primary member 65 is integral with the rack 10, therefore is a primary fixed member. The secondary member 66 is removably mounted to the first one, therefore is a secondary removable member.

According to the preferred embodiment, the primary and secondary members 65, 66 are bars.

The primary member 65 and the secondary member 66 each comprises a spherical indentation 67 and are arranged to envelop the tow ball head 62 from opposite sides with the spherical indentations 67.

Advantageously, the spherical indentations 67 are designed to accommodate the tow ball.

The connector assembly 64 is therefore configured so that it connects firmly with no movement to the tow ball head 62 and shank 61.

The primary member 65 and the secondary member 66 are held together by a plurality of fasteners 68. In particular, the secondary movable member 66 is attached to the primary member 65 by means of the fasteners 68. Both primary member 65 and secondary member 66 have corresponding fastener holes 69, distributed around the indentations 67 so that the fasteners 68 define a cage for the tow ball.

In particular, the fastener holes 69 are strategically placed to achieve the rigidity required.

According to one embodiment, the tow ball head 62 comprises a junction portion 62a which connects the tow ball with the shank 61. Accordingly, the indentation 67 comprises an additional spacing 67a for accommodating this junction 62a.

Preferably, the fasteners 68 are distributed around the indentations 67 so that at least a pair of fasteners 68 is located at opposite sides of the spherical indentation 67 and at least another pair of fasteners 68 is located at opposite sides of the additional spacing 67a. Accordingly, the fastener holes 69 are positioned as described as well.

In particular, in use, the spherical indentation 67 is located above the additional spacing 67a. Therefore, the two pairs of fasteners can be defined as upper pair and lower pair.

Preferably, the two holes on the upper pair are obtained at the top-right corner and top-left corner of the spherical indentation 67.

To secure the connector on the tow ball during the first stage of installation, the two upper fasteners are installed loosely so that the two members allow the assembly to slip over the tow ball. Then the two lower fasteners are inserted at their position near additional spacing.

When the four fasteners are tightened to the specified torque, it results in a secure hold with no movement while the tow ball is compressed around its entire head and the furthest point on the shank with a fastener positioning that renders impossible forward and backward movement. In the same fashion, the lower fasteners along the shank serve two specific purposes to be preventing any movement forward and backward and while compression the two parts also using the indentation automatically aligns and contours the stem so that no movement is allowed.

The rack 10 comprises a main pivot system comprising twin plates 23. The rack 10 comprises a pivot arm 14 having distal 19 and proximal ends 21. The proximal end 19 is secured to the twin plates 23 via a pivot connector 27 which allows the pivot arm 14 to freely pivot about the main pivot system. Twin plates 23 may each have a through-hole 29 so that a conventional pin 31 can be inserted therethrough to lock the pivot arm 14 in a raised position. To secure the pin 31 within the twin plates 23, a conventional clamp 33 is preferably attached thereto.

The connector assembly 64 is preferably accommodated between the twin plates. In particular, the primary member 65 is connected to the main pivot system by means of additional fasteners 68.

Fasteners 68 and pivot connector 27 may simply have the same nut and bolt configuration.

The connector assembly 64 is held in a sandwich fashion between the two pivot plates 23. Additionally, shims may be added to create the width necessary to allow the pivoting lifting arm to rotate to allow within its confinement.

Advantageously, the primary member 65 and the secondary member 66 each comprise a corresponding additional hole 69a, located at a side of the spherical indentation 67, for a lockable keyed pin 68a. This defines a lockable safety system, for emergency backup.

The additional hole 69a is located on the lifting arm side.

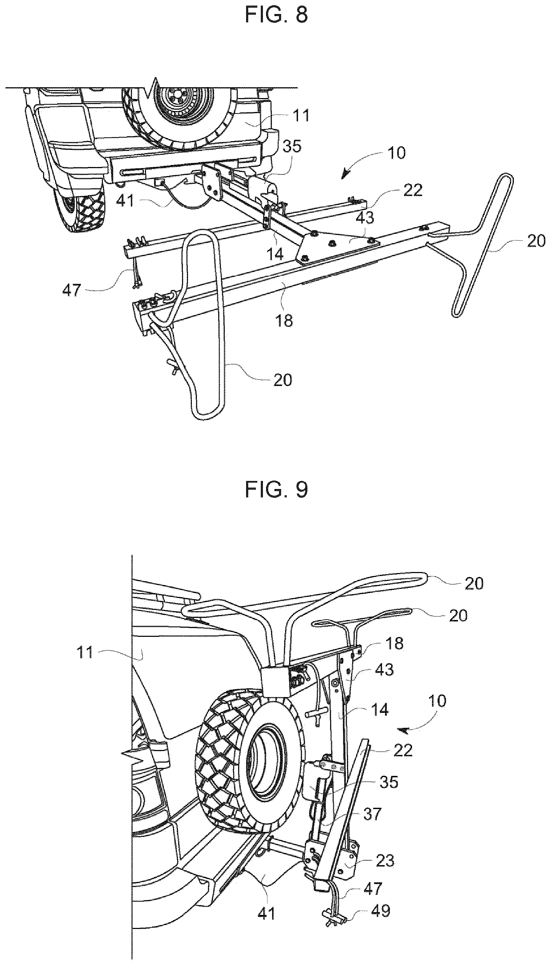

The rack 10 comprises an actuator 16 connected to the main pivot system and to the pivot arm 14 which is operable to actuate the pivot arm 14 between a lowered position (as illustrated in Fig. 8) and a raised position (as illustrated in Fig. 9). The actuator 16 may be a hydraulic linear actuator, a pneumatic linear actuator, a piezoelectric actuator, or preferably, an electric linear actuator.

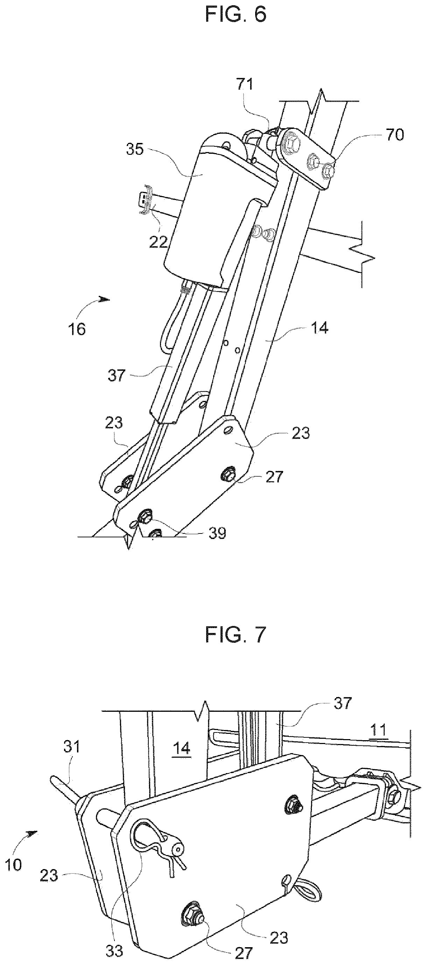

According to the preferred embodiment, illustrated in Fig. 6, actuator 16 comprises an actuator body 35 which is pivotably connected to pivot arm 14 via twin actuator plates 70 connected thereto and actuator pin 71 connected therethrough. Extending from the actuator body 35 is a piston member 37 which extends and retracts therefrom and is connected at its free end to main pivot system via fasteners 39 and the twin plates 23.

In the embodiment in which the actuator 16 is an electric linear actuator, the actuator 16 is configured to be electrically connected to the motor vehicle's 11 onboard electrical system via a conventional wiring harness 41 or alternatively to an external battery.

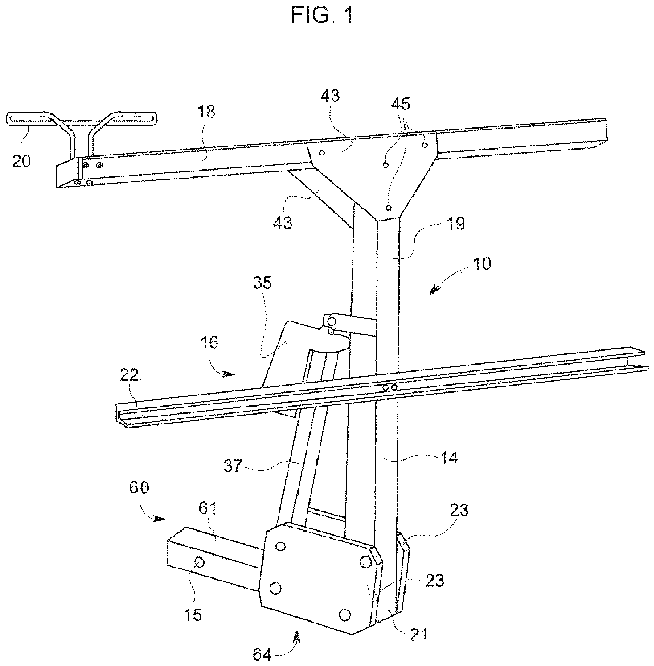

According to a preferred embodiment, illustrated in Fig. 1, the rack 10 comprises a first cross-member 18 connected adjacent the distal end 19 of the pivot arm 14.

Preferably, the first cross-member 18 is connected to pivot arm 14 via twin mount plates 43. The first cross member 18 is mounted perpendicular to pivot arm 14 and fasteners 45 are used to secure the first cross member, pivot arm and twin mount plates together. The first cross-member 18 comprises at least one wheel holder 20 operable to receive a first wheel 55 of a bicycle. As those skilled in the art will appreciate, a plurality of wheel holders 20 may be added along first cross-member 18 to accommodate more bicycles on the rack 10, but for the sake of illustration, only one wheel holder has been depicted. The wheel holder 20 is shaped to easily accommodate and frictionally fit any sized bicycle wheel.

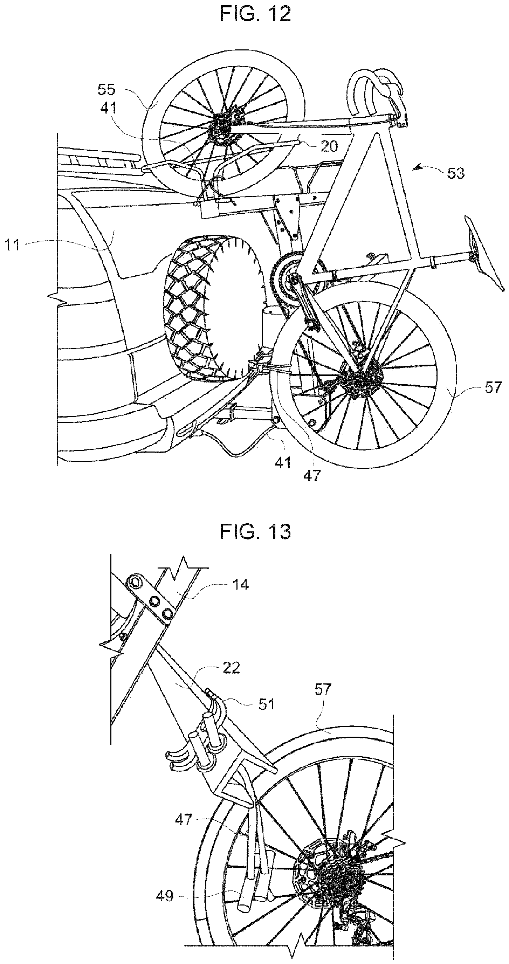

According to a preferred embodiment, illustrated in Fig. 1, the rack 10 comprises a second cross-member 22 connected perpendicularly and adjacent the distal end 21 of the pivot arm 14 and operable to receive a second 57 wheel of bicycle. Preferably, the second cross-member 22 is adjustably connectable lengthwise along pivot arm 14 to allow for various bicycle wheelbase lengths. To secure the first and second wheels to the first 18 and second 22 cross-members, rack 10 comprises first and second wheel securing devices. Referring now to Fig. 12, the securing devices preferably comprise straps 47 connected to the cross member 22 which can be wrapped through the wheel 57 and then affixed back onto the cross-member. Straps 47 may comprise a handle 49 to aid in pulling the straps through the wheel 57 which may then be secured to cross-member 22 via handle catchers 51. Although Fig. 12 depicts the securing device as used on second cross-member 22, it will be appreciated that the same securing device may be used on first cross-member 18. As those skilled in the art will appreciate, any conventional securing devices may be used to secure the first 55 and second wheels of the bicycle to the rack 10.

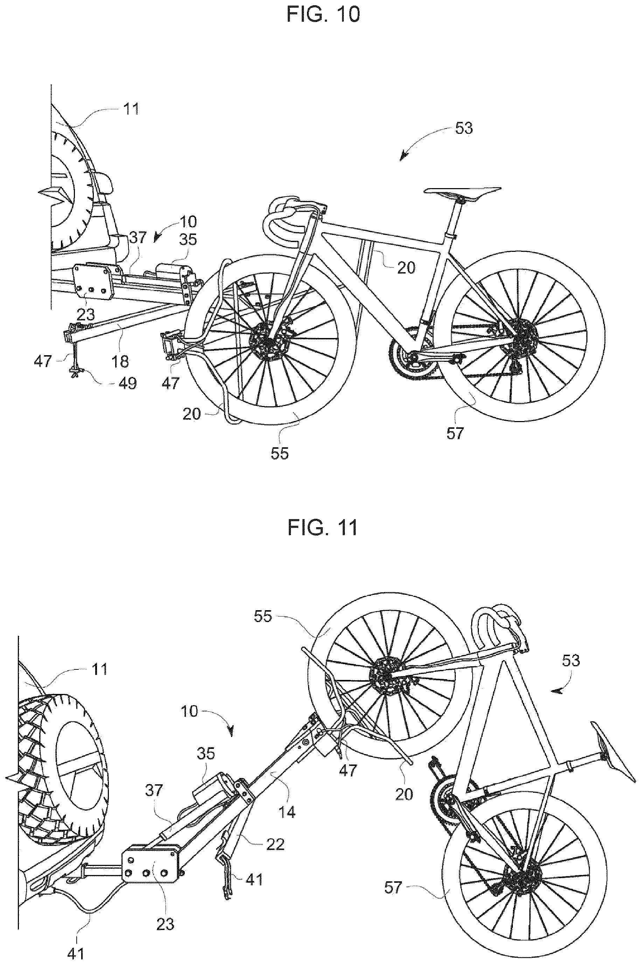

Referring to Fig. 10, after securing the rack 10 to the vehicle 11 via the connector assembly 64, pivot arm 14 is lowered to receive a bicycle 53. First wheel 55 is maneuvered into holder 20 to frictionally engage the wheel and a user may then further secure the wheel within the holder by threading straps 47 through the spokes of the wheel and over the wheelrim and attaching the handle 49 to catcher 51. Referring to Fig. 11, once the first wheel 55 is secured, a user may then operate the actuator 16 (either via remote control or a control unit on rack 10) to raise the pivot arm 14 to a semi raised position. As the arm 14 is raised, bicycle 53 pivots bringing the second wheel 57 closer to the rack 10, and in particular, closer to second cross-member 22. In the semi-raised position, the weight of the bicycle 53 is mainly supported by the rack 10. Here, the user can then lift the second wheel 57 to the second cross member 22 and attach the second wheel to the second cross-member using straps 47, handle 51 in the same manner that was used to attach the first wheel 55 to the holder 20 of first cross-member 18. Referring to Fig. 12, now that the bicycle 53 is fully secured to the rack, a user may further operate actuator 16 to fully raise the pivot arm 14 to its raised position. A user may then use pin 31 and clamp 33 to better secure the pivot arm 14 to main pivot system while distributing the rotational forces created by the pivot arm and bicycle 53 off of the actuator 16. Preferably, in the fully raised position, main pivot system and the pivot arm 14 form an interior angle of less than 90° thus placing the combined center of gravity of the rack 10 and the bicycle 53 closer to the motor vehicle 11. This is advantageous as other conventional bicycle racks have their center of gravities placed further away from the motor vehicle 11 which adversely affects the driving characteristics of the motor vehicle.

Although preferably offered as a complete unit, bicycle rack 10 may be sold as a kit of components including: a main pivot system and a connector assembly 64 operable to connect to the motor vehicle 11; a pivot arm 14 having distal 19 and proximal ends 21, with the proximal end pivotably connectable to the main pivot system; an actuator 16 connectable to the main pivot system and to the pivot arm 14 and operable to actuate the pivot arm between a lowered position and a raised position relative to the main pivot system with the actuator configured to be electrically connected to an electric source; a first securing device to secure a first end of the bicycle 53 to the pivot arm 14; a second securing device to secure a second end of the bicycle 53 to the pivot arm 14; a wiring harness 41 to connect the actuator 16 to an electrical source such as a battery or the motor vehicle's 11 onboard electrical system; and fasteners.

While embodiments of the invention have been described and illustrated, such embodiments should be considered illustrative of the invention only. The invention may include variants not described or illustrated herein in detail. Thus, the embodiments described and illustrated herein should not be considered to limit the invention as construed in accordance with the accompanying claims.

The characteristics of the mountable rack for a motor vehicle, according to the present invention, emerge clearly from the above description, as do the advantages.

In particular, the presence of the connector assembly in the form of two members, one of them integral with rest of the rack, having a spherical indentation to envelop the tow ball and the cage arrangement defined by the fastener allows to define a secure and rigid coupling between the rack and the vehicle, even when carrying heavy vehicles such as e-bikes.

## Claims

1. A mountable bicycle, motorcycle or all-terrain vehicle rack (10) for a motor vehicle (11), comprising:
a main pivot system;
a coupling assembly (60) comprising a shank (61) connectible to the motor vehicle (11), a tow ball head (62) arranged at an end of the shank (61) and a connector assembly (64);
a pivot arm (14) having distal (19) and proximal (21) ends, said proximal end (21) pivotably connected to said main pivot system;
an actuator (16) connected to said main pivot system and to said pivot arm (14) and operable to actuate said pivot arm (14) between a lowered position and a raised position relative to said main pivot system, said actuator (16) being configured to be electrically connected to an electric source;
first securing means adjacent said distal end (19) of said pivot arm (14) to secure a first end of the bicycle, motorcycle or all-terrain vehicle to said pivot arm (14);
second securing means adjacent said proximal end (21) of said pivot arm (14) to secure a second end of the bicycle, motorcycle or all-terrain vehicle to said pivot arm (14),
**characterized in that** the connector assembly (64) comprises a primary member (65) and a secondary member (66), the primary member (65) being rigidly connected to the main pivot system, the secondary member (66) being removably mounted to the first one;
the primary member (65) and the secondary member (66) each comprises a spherical indentation (67), the primary member (65) and the secondary member (66) are arranged to envelop the tow ball head (62) from opposite sides with the spherical indentations (67), the primary member (65) and secondary member (66) have corresponding fastener holes (69) distributed around the indentations (67) for accommodating fasteners (68).

2. The mountable rack (1) according to claim 1, wherein the tow ball head (62) comprises a junction portion (62a) which connects the tow ball with the shank (61), said indentation (67) comprising an additional spacing (67a) for accommodating this junction (62a), the fastener holes (69) being distributed around the indentations (67) so that at least a pair of fasteners (68) is located at opposite sides of the spherical indentation (67) and at least another pair of fasteners (68) is located at opposite sides of the additional spacing (67a).

3. The mountable rack (1) according to claim 1 or 2, wherein the main pivot system comprises a pair of twin plates (23), said connector assembly (64) being sandwiched between said twin plates (23).

4. The mountable rack (1) according to any one of the preceding claims, wherein the connector assembly (64) comprises a lockable safety system for the primary member (65) and the secondary member (66).

5. The mountable rack (1) according to claim 4, wherein the lockable safety system comprises one corresponding additional hole (69a) obtained on both the primary and secondary members (65, 66), located at a side of the spherical indentation (67), and a lockable keyed pin (68a) inserted therethrough.

6. The mountable rack (1) according to any of the preceding claims, wherein said actuator is an electric linear actuator, a hydraulic linear actuator, a pneumatic linear actuator, or a piezoelectric actuator.

7. The mountable rack (1) according to any of the preceding claims, wherein said electric source is a battery or the motor vehicle's onboard electrical system.

8. The mountable rack (1) according to any of the preceding claims, wherein in said raised position, said connector mount and said pivot arm form an interior angle of less than 90°.

9. The mountable rack (1) according to any of the preceding claims, wherein said first and second securing means comprise straps.

10. The mountable rack (1) according to any of the preceding claims, wherein said first securing means comprises a first cross-member connectable adjacent said distal end of said pivot arm, said first cross-member comprising: a wheel holder operable to receive a first wheel of the bicycle, motorcycle or all-terrain vehicle; and first wheel securing means to secure said first wheel to said wheel holder.

11. The mountable rack (1) according to any of the preceding claims, wherein said second securing means comprises: a second cross-member connectable to said pivot arm and operable to receive a second wheel of the bicycle, motorcycle or all-terrain vehicle; and second wheel securing means to secure a second wheel of the bicycle, motorcycle or all-terrain vehicle to said second-cross member.

12. The mountable rack (1) according to any of the preceding claims, wherein said pivot arm comprises opposed first and second sides, wherein when said pivot arm is in said raised position, said first side is adjacent the motor vehicle and the bicycle, motorcycle or all-terrain vehicle is secured to said pivot arm adjacent said second side.
